# EUROPÄISCHE PATENTSCHRIFT

(11) **EP 1 410 944 B1**
(45) Veröffentlichungstag und Bekanntmachung des Hinweises auf die Patenterteilung: **21.06.2006**
(21) Anmeldenummer: 03450209.6
(22) Anmeldetag: 17.09.2003
(51) Int. Cl.: B60M 1/28

(54) **Verfahren zum Verlegen eines Fahrleitungsseiles und Maschine**
Method for installing a catenary wire and machine
Méthode d'installation d'une ligne caténaire et machine

(30) Priorität: 17.10.2002 AT 6892002
(43) Veröffentlichungstag der Anmeldung: 21.04.2004
(73) Patentinhaber: Franz Plasser Bahnbaumaschinen-Industriegesellschaft m.b.H., 1010 Wien (AT)
(72) Erfinder: Theurer, Josef, 1010 Wien (AT); Gruber, Leopold, 3270 Scheibbs (AT)

(56) Entgegenhaltungen:
- EP-A- 0 861 752
- EP-A- 1 231 097
- GB-A- 1 379 791

## Beschreibung

Die Erfindung betrifft ein Verfahren zum Verlegen eines aus einem Fahrdraht oder einem Tragseil einer Fahrleitung eines Gleises gebildeten Fahrleitungsseiles, das mit einer Trommelabzugskraft von einer Speichertrommel abgezogen und mit einer Seilspannung über Windenräder einer Friktionswinde geführt wird, um von dieser mit einem einer Abzugskraft entgegengerichteten Abzugswiderstand zur Erzeugung einer Verlegespannung auf eine Montagerolle abgegeben zu werden, sowie eine Maschine zum Verlegen eines Fahrteitungsseites.

Gemäß US 5 114 119 und EP 0 861 752 ist bereits eine derartige Maschine bekannt, mit der ein Fahrdraht und ein Tragseil einer elektrischen Oberleitung eines Gleises gemeinsam und mit der endgültigen Verlegespannung verlegt werden können. Fahrdraht und Tragseil werden dabei kontinuierlich von jeweils einer eigenen Speichertrommel abgezogen und durchlaufen eine Friktionswinde als Zugspannungsvorrichtung, bevor sie anhand einer Montagerolle in der korrekten Höhen- und Seitenlage für die Endmontage positioniert werden. Die Friktionswinde besteht aus zwei in Maschinenlängsrichtung hintereinander angeordneten Windenrädern, die durch einen gemeinsamen Hydraulikmotor angetrieben werden.

Die Aufgabe der vorliegenden Erfindung liegt nun in der Schaffung eines Verfahrens der gattungsgemäßen Art, mit dem auch Fahrleitungsseile mit höherer und konstanter Verlegespannung problemlos von der Speichertrommel abziehbar sind.

Erfindungsgemäß wird diese Aufgabe mit einem Verfahren der eingangs genannten Art dadurch gelöst, dass die Seilspannung zwischen den Windenrädern der Friktionswinde sukzessive bis zum Abzugswiderstand gesteigert wird.

Damit besteht in vorteilhafter Weise die Möglichkeit, die auf die Seilrillen der Windenräder einwirkenden Spannkräfte zur Verbesserung des Kraftschlusses stufenweise von einem zum nächsten Windenrad zu erhöhen, bis schließlich am letzten Windenrad die gewünschte Verlegespannung zur Wirkung kommt. Außerdem besteht durch die Anordnung mehrerer voneinander unabhängiger Antriebe der Vorteil, daß die Abzugskräfte wahlweise in einer großen Bandbreite von ca. 5 bis 30 Kilonewton problemlos variierbar sind und vor allem auch konstant gehalten werden können.

Weitere Vorteile und Ausbildungen der Erfindung ergeben sich aus den weiteren Ansprüchen und der Zeichnung.

Im folgenden wird die Erfindung anhand von in der Zeichnung dargestellten Ausführungsbeispielen näher beschrieben.

Es zeigen:
Fig. 1 eine Seitenansicht einer Maschine,
Fig. 2 eine Draufsicht auf die Maschine,
Fig. 3 und 4 jeweils eine vergrößerte Detailansichten einer Friktionswinde, und
Fig. 5 eine schematisierte Darstellung einer weiteren Variante einer Friktionswinde.

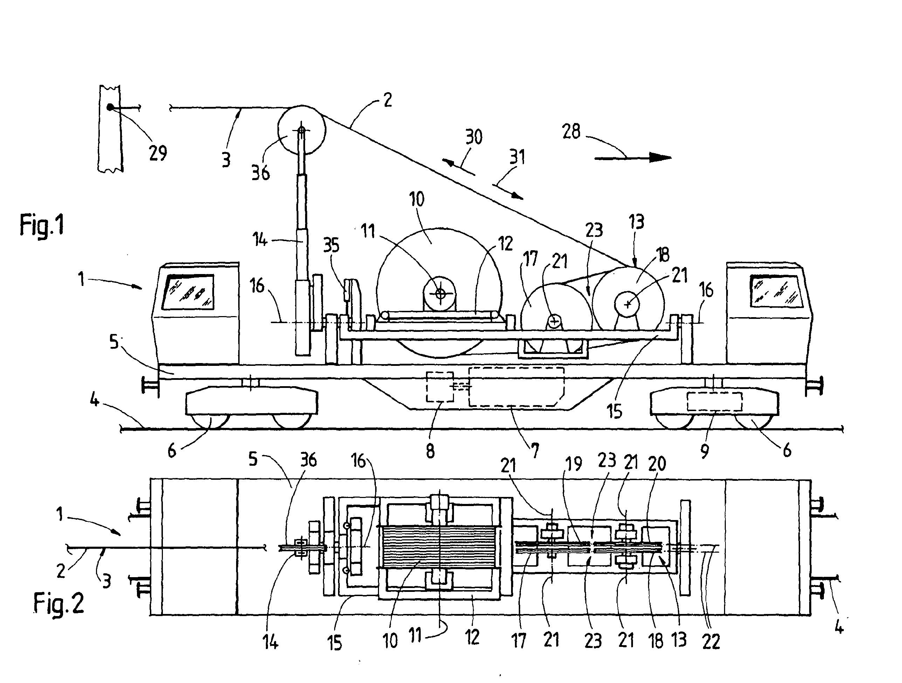

In Fig. 1 und 2 ist eine Maschine 1 zum Verlegen eines Fahrdrahtes (bzw. auch eines nicht näher dargestellten Tragseiles) einer Fahrleitung 3 eines Gleises 4 dargestellt. Der Einfachheit halber wird im folgenden als Fahrdraht und Tragseil umfassender Ausdruck Fahrleitungsseil 2 verwendet. Die Maschine 1 weist einen Maschinenrahmen 5 auf, der über zwei Schienenfahrwerke 6 auf dem Gleis 4 abgestützt ist. Ein Motor 7 und ein Hydraulikaggregat 8 sind für die Energieversorgung eines Fahrantriebes 9 der Maschine 1 und aller weiteren noch zu beschreibenden Antriebe vorgesehen.

Das zu verlegende Fahrleitungsseil 2 (Fahrdraht) ist auf einer Speichertrommel 10 aufgewickelt, die um eine Achse 11 drehbar auf einem querverstellbaren Schlitten 12 gelagert ist. Dieser ist ebenso wie eine Friktionswinde 13 und eine höhenverstellbare, eine Montagerolle 36 aufweisende Teleskopsäule 14 auf einem Trägerrahmen 15 befestigt, der durch einen Antrieb 35 um eine in Maschinenlängsrichtung verlaufende Achse 16 relativ zum Maschinenrahmen 5 verschwenkbar ist.

Die Friktionswinde 13 setzt sich aus einem - bezüglich einer Umwicklungsrichtung 24 - ersten, zweiten, dritten und vierten Windenrad 17,18,19,20 zusammen, die jeweils unabhängig voneinander um eine Drehachse 21 drehbar gelagert sind. Das erste und das in Maschinenlängsrichtung dahinter angeordnete zweite Windenrad 17,18 bzw. das dritte und vierte Windenrad 19,20 sind jeweils in einer gemeinsamen Ebene 22 angeordnet und bilden jeweils ein Radpaar 23. Die beiden Ebenen verlaufen parallel zueinander.

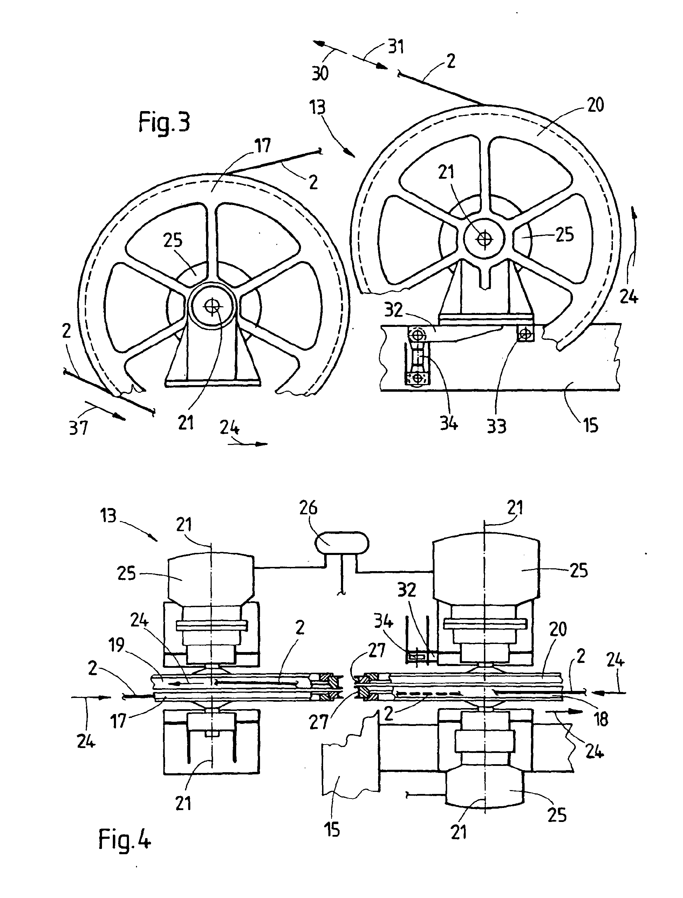

Wie insbesondere in Fig. 4 ersichtlich, ist das erste bzw. zweite Windenrad 17,18 bezüglich der jeweiligen Drehachse 21 jeweils koaxial zum dritten bzw. vierten Windenrad 19,20 angeordnet. Dem zweiten, dritten und vierten Windenrad 18,19,20 ist je ein eigener Hydraulikmotor 25 zugeordnet. Diese weisen jeweils ein unterschiedliches Schluckvolumen (beispielsweise 1100, 1800 und 2800 ccm/U) für ein in Umwicklungsrichtung 24 vom zweiten zum vierten Windenrad 18,19,20 ansteigendes Drehmoment auf. Wahlweise können die Hydraulikmotoren 25 jedoch auch über ein Steuersystem 26 mit unterschiedlichem Betriebsdruck beaufschlagt werden.

Zur Aufnahme des Fahrleitungsseiles 2 ist auf jedem Windenrad 17 - 20 eine Seilrille 27 vorgesehen, die am - bezüglich der Umwicklungsrichtung 24 - zweiten und dritten Windenrad 18,19 breiter als am ersten und vierten Windenrad 17,20 ausgebildet ist.

Im Arbeitseinsatz wird die Maschine 1 kontinuierlich in einer Arbeitsrichtung 28 verfahren. Das Fahrleitungsseil 2 ist an einem Ausleger 29 eines Mastens befestigt und wird infolge der Vorfahrt der Maschine 1 mit einer konstanten Abzugskraft 30 für eine der Endmontage entsprechende Verlegespannung von der Friktionswinde 13 abgezogen. Durch diese wird am vierten Windenrad 20 ein der Abzugskraft 30 entgegengerichteter Abzugswiderstand 31 erzeugt. Dazu wird das Fahrleitungsseil 2 von der Speichertrommel 10 in einer unteren Ebene mit einer Trommelabzugskraft 37 auf das erste und in weiterer Folge auf das zweite Windenrad 17,18 und von diesem in einer oberen Ebene zum dritten und schließlich wiederum in der unteren Ebene zum vierten Windenrad 20 in der jeweiligen Seilrille 27 geführt.

Da das Drehmoment durch die unterschiedlichen Drehmomente der Hydraulikmotoren 25 sukzessive ansteigt, ist ein optimaler Kraftschluss des Fahrleitungsseiles 2 am jeweiligen Windenrad 17-20 gewährleistet. Wahlweise könnte für das erste Windenrad 17 ebenfalls ein Hydraulikmotor verwendet werden. Dies ist jedoch insoferne nicht sehr zweckmäßig, als der Umschlingungswinkel des Fahrleitungsseiles 2 sehr gering ist.

Gemäß Fig. 3 ist das vierte Windenrad 20 (das vordere Windenrad 18 ist nicht dargestellt) auf einer Wippe 32 befestigt, die um eine parallel zur Drehachse 21 verlaufende Achse 33 verschwenkbar mit dem Trägerrahmen 15 verbunden ist. Ein gegenüberliegendes Ende der Wippe 32 ist durch einen Druckmessbolzen 34 mit dem Trägerrahmen 15 verbunden. Damit kann in vorteilhafter Weise die Verlegespannung exakt gemessen und über ein Regelsystem konstant gehalten werden.

Es ist natürlich auch möglich, die Maschine 1 - wie in der eingangs erwähnten US 5 114 119 - zum gleichzeitigen Verlegen einer kompletten Fahrleitung 3 (Fahrdraht und Tragseil) auszubilden. Dazu wird eine weitere Speichertrommel 10, eine zweite Friktionswinde 13 und eine zusätzliche Montagerolle 36 benötigt. Diese können wahlweise am selben oder an einem zweiten Trägerrahmen 15 angeordnet werden.

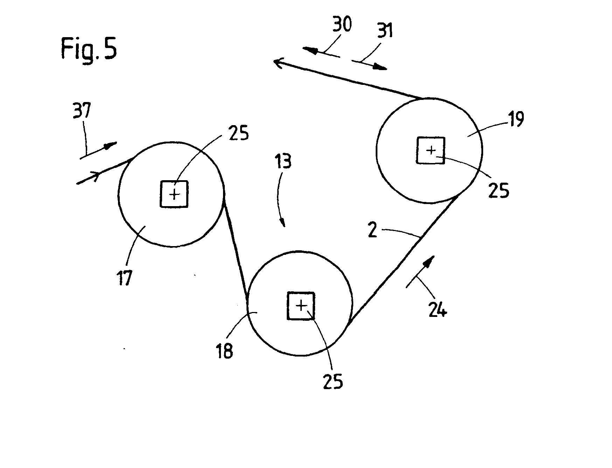

Gemäß einer in Fig. 5 dargestellten Variante setzt sich die Friktionswinde 13 aus einem bezüglich der Umwicklungsrichtung 24 ersten, zweiten und dritten, in einer gemeinsamen Ebene angeordneten Windenrad 17,18,19 zusammen, denen je ein eigener Hydraulikmotor 25 zugeordnet ist. Das Fahrleitungsseil 2 wird durch das erste Windenrad 17 mit einer Trommelabzugskraft 37 (beispielsweise 5 Kilonewton) von einer nicht näher dargestellten Speichertrommel abgezogen. Durch das erhöhte Drehmoment des zweiten Windenrades 18 wird die Seilspannung auf 15 Kilonewton erhöht. Schließlich wird durch das dritte Windenrad 19 die Seilspannung und damit der Abzugswiderstand 31 auf 25 Kilonewton erhöht.

## Patentansprüche

1. Verfahren zum Verlegen eines aus einem Fahrdraht oder einem Tragseil einer Fahrleitung (3) eines Gleises (4) gebildeten Fahrleitungsseiles (2), das mit einer Trommelabzugskraft (37) von einer Speichertrommel (10) abgezogen und mit einer Seilspannung über Windenräder (17,18,19,20) einer Friktionswinde (13) geführt wird, um von dieser mit einem einer Abzugskraft (30) entgegengerichteten Abzugswiderstand (31) zur Erzeugung einer Verlegespannung auf eine Montagerolle (36) abgegeben zu werden, **dadurch gekennzeichnet, dass** die Seilspannung zwischen den Windenrädern (17,18,19,20) der Friktionswinde (13) sukzessive bis zum Abzugswiderstand (31) gesteigert wird.

2. Maschine (1) zum Verlegen eines aus einem Fahrdraht oder einem Tragseil einer Fahrleitung (3) eines Gleises (4) gebildeten Fahrleitungsseiles (2), mit einem auf Schienenfahrwerken (6) verfahrbaren Maschinenrahmen (5), einer das Fahrleitungsseil (2) lagernden Speichertrommel (10), einer höhenverstellbaren Montagerolle (36) und einer zwischen dieser und der Speichertrommel (10) angeordneten Friktionswinde (13), mit der beim Abziehen des Fahrleitungsseiles (2) von der Speichertrommel (10) unter Erzeugung einer Verlegespannung ein - einer auf das Fahrleitungsseil (2) einwirkenden Abzugskraft (30) entgegenwirkender - Abzugswiderstand (31) gebildet wird, **dadurch gekennzeichnet, dass** die Friktionswinde (13) aus vier voneinander unabhängig um eine Drehachse (21) drehbaren Windenrädern (17, 18, 19, 20) gebildet ist, wobei die Seilspannung zwischen den Windenrädern (17,18,19,20) der Friktionswinde (13) sukzessive bis zum Abzugswiderstand (31) gesteigert wird und wobei je zwei in Maschinenlängsrichtung hintereinander angeordnete, ein Radpaar (23) bildende Windenräder (17, 18; 19, 20) in einer gemeinsamen Ebene (22) angeordnet sind.

3. Maschine nach Anspruch 2, **dadurch gekennzeichnet, dass** die beiden jeweils zwei in Maschinenlängsrichtung hintereinander angeordnete Windenräder (17, 18; 19, 20) aufweisenden Radpaare (23) parallel zueinander angeordnet sind.

4. Maschine nach Anspruch 2 oder 3, **dadurch gekennzeichnet, dass** je ein - bezüglich der Maschinenlängsrichtung - vorderes und ein hinteres Windenrad (17, 18) eines Radpaares (23) mit ihren Drehachsen (21) koaxial zu den Drehachsen (21) der beiden Windenräder (19, 20) des in Maschinenquerrichtung gegenüberliegenden Radpaares (23) angeordnet sind.

5. Maschine nach Anspruch 2,3 oder 4 **dadurch gekennzeichnet, dass** - bezüglich einer Umwicklungsrichtung (24) des Fahrleitungsseiles (2) - dem zweiten, dritten und vierten Windenrad (18, 19, 20) jeweils ein eigener Hydraulikmotor (25) zugeordnet ist.

6. Maschine nach Anspruch 5, **dadurch gekennzeichnet, dass** die Hydraulikmotoren (25) jeweils unterschiedliches Schluckvolumen aufweisen.

7. Maschine nach Anspruch 5, **dadurch gekennzeichnet, dass** die Hydraulikmotoren (25) über ein Steuersystem (26) mit unterschiedlichem Betriebsdruck beaufschlagbar sind.

8. Maschine nach Anspruch 5, **dadurch gekennzeichnet, dass** die Hydraulikmotoren (25) je ein unterschiedliches - bezüglich der Umwicklungsrichtung (24) des Fahrleitungsseiles (2) - ansteigendes maximales Drehmoment aufweisen.

9. Maschine nach einem der Ansprüche 2 bis 7, **dadurch gekennzeichnet, dass** eine zur Aufnahme des Fahrleitungsseiles (2) vorgesehene Seilrille (27) am - bezüglich der Umwicklungsrichtung (24) des Fahrleitungsseiles (2) - zweiten und dritten Windenrad (18, 19) breiter ausgebildet ist als die Seilrille (27) des ersten und vierten Windenrades (17, 20).

10. Maschine nach einem der Ansprüche 2 bis 9, **dadurch gekennzeichnet, dass** die Windenräder (17, 18, 19, 20) gemeinsam mit der Speichertrommel (10) auf einem Trägerrahmen (15) gelagert sind, der durch einen Antrieb (35) um eine in Maschinenlängsrichtung verlaufende Achse (16) relativ zum Maschinenrahmen (5) verschwenkbar ist.

## Claims

1. A method of installing a catenary cable (2), formed by a contact wire or a carrying cable of a catenary (3) of a track (4), which is pulled from a storage drum (10) with a drum pull-off force (37) and guided with a cable tension over winch wheels (17,18,19,20) of a friction winch (13) in order to be passed from the latter onto a mounting roller (36) with a pull-off resistance (31), counteracting a pull-off force (30), for producing an installation tension, **characterized in that**, between the winch wheels (17,18,19,20) of the friction winch (13), the cable tension is increased gradually up to the pull-off resistance (31).

2. A machine (1) for installing a catenary cable (2) formed by a contact wire or a carrying cable of a catenary (3) of a track (4), comprising a machine frame (5) mobile on on-track undercarriages (6), a storage drum (10) carrying the catenary cable (2), a vertically adjustable mounting roller (36), and, arranged between the latter and the storage drum (10), a friction winch (13) with which a pull-off resistance (31) - counteracting a pull-off force (30) acting upon the catenary cable (2) - is produced when the catenary cable (2) is pulled from the storage drum (10) while creating an installation tension, **characterized in that** the friction winch (13) is formed by four winch wheels (17,18,19,20), rotatable independently of one another about an axis of rotation (21), wherein, between the winch wheels (17,18,19,20) of the friction winch (13), the cable tension is increased gradually up to the pull-off resistance (31), and wherein two winch wheels (17,18;19,20) at a time, arranged one following the other in the longitudinal direction of the machine and forming a wheel pair (23), are arranged in a common plane (22).

3. A machine according to claim 2, **characterized in that** the two wheel pairs (23), each comprising two winch wheels (17,18;19,20) arranged one following the other in the longitudinal direction of the machine, are arranged parallel to one another.

4. A machine according to claim 2 or 3, **characterized in that** the axes of rotation (21) of a respective front and rear winch wheel (17,18) - with respect to the longitudinal direction of the machine - of a wheel pair (23) are arranged coaxially to the axes of rotation (21) of the two winch wheels (19,20) of the wheel pair (23) lying opposite in the transverse direction of the machine.

5. A machine according to claim 2,3 or 4, **characterized in that** a separate hydraulic motor (25) is associated in each case with the second, third and fourth winch wheel (18,18,20) - with regard to a winding direction (24) of the catenary cable (2).

6. A machine according to claim 5, **characterized in that** the hydraulic motors (25) each have a different swallowing capacity.

7. A machine according to claim 5, **characterized in that** the hydraulic motors (25) are actuatable with different operating pressure via a control system (26).

8. A machine according to claim 5, **characterized in that** the hydraulic motors (25) each have a different maximum torque, increasing with regard to the winding direction (24) of the catenary cable (2).

9. A machine according to one of claims 2 to 7, **characterized in that** a cable groove (27) provided for receiving the catenary cable (2) is configured to be wider on the second and third winch wheel (18,19) - with regard to the winding direction (24) of the catenary cable (2) - than the cable groove (27) of the first and fourth winch wheel (17,20).

10. A machine according to one of claims 2 to 9, **characterized in that** the winch wheels (17,18,19,20), together with the storage drum (10), are mounted on a support frame (15) which, by means of a drive (35), is pivotable relative to the machine frame (5) about an axis (16) extending in the longitudinal direction of the machine.

## Revendications

1. Procédé d'installation d'un câble (2) de ligne caténaire formé d'un conducteur aérien ou d'un câble porteur d'une ligne caténaire (3) d'une voie ferrée (4), lequel est tiré d'un tambour de stockage (10) avec une force de tirage (37) du tambour et guidé avec une tension de câble par l'intermédiaire de roues (17, 18, 19, 20) de treuil d'un treuil à friction (13), afin d'être débité par celui-ci sur une poulie de montage (36) avec une résistance de tirage (31) opposée à une force de tirage (30) en vue d'y générer une tension d'installation, **caractérisé en ce que** la tension de câble est augmentée successivement entre les roues (17, 18, 19, 20) de treuil du treuil à friction (13) jusqu'à la résistance de tirage (31).

2. Machine (1) d'installation d'un câble (2) de ligne caténaire formé d'un conducteur aérien ou d'un câble porteur d'une ligne caténaire (3) d'une voie ferrée (4), comportant un cadre (5) de machine pouvant être déplacé sur des boggies (6), un tambour de stockage (10) stockant le câble (2) de ligne caténaire, une poulie de montage (36) réglable en hauteur et un treuil à friction (13) disposé entre celle-ci et le tambour de stockage (10), au moyen duquel une résistance de tirage (31) opposée à une force de tirage (30) agissant sur le câble (2) de ligne caténaire est formée en générant une tension d'installation lors du tirage du câble (2) de ligne caténaire du tambour de stockage (10), **caractérisée en ce que** le treuil à friction (13) est formé de quatre roues (17, 18, 19, 20) de treuil capables de tourner autour d'un arbre de rotation (21) indépendamment les unes des autres, la tension de câble étant augmentée successivement entre les roues (17, 18, 19, 20) de treuil du treuil à friction (13) jusqu'à la résistance de tirage (31) et chacune de deux roues (17, 18; 19, 20) de treuil formant une paire de roues (23) disposées l'une derrière l'autre dans le sens longitudinal de la machine étant disposée dans un plan commun (22).

3. Machine selon la revendication 2, **caractérisée en ce que** les deux paires de roues (23) présentant chacune deux roues (17, 18; 19, 20) de treuil disposées l'une derrière l'autre dans le sens longitudinal de la machine sont disposées de façon parallèle l'une à l'autre.

4. Machine selon la revendication 2 ou 3, **caractérisée en ce que** chaque roue avant et roue arrière (17, 18) de treuil, dans le sens longitudinal de la machine, d'une paire de roues (23) sont disposées avec leurs arbres de rotation (21) de façon coaxiale aux arbres de rotation (21) des deux roues (19, 20) de treuil de la paire de roues (23) opposée dans le sens transversal de la machine.

5. Machine selon la revendication 2, 3 ou 4, **caractérisée en ce que**, dans un sens d'enroulement (24) du câble (2) de ligne caténaire, un moteur hydraulique (25) propre est chaque fois associé à la deuxième, troisième et quatrième roue (18, 19, 20) de treuil.

6. Machine selon la revendication 5, **caractérisée en ce que** les moteurs hydrauliques (25) présentent des volumes d'admission chaque fois différents.

7. Machine selon la revendication 5, **caractérisée en ce que** les moteurs hydrauliques (25) peuvent être sollicités par des pressions de service différentes par l'intermédiaire d'un système de commande (26).

8. Machine selon la revendication 5, **caractérisée en ce que** les moteurs hydrauliques (25) présentent chacun un couple de rotation maximum croissant différent dans le sens d'enroulement (24) du câble (2) de ligne caténaire.

9. Machine selon l'une quelconque des revendications 2 à 7, **caractérisée en ce qu'**une gorge (27) de câble prévue pour recevoir le câble (2) de ligne caténaire est conformée sur la deuxième et la troisième roue (18, 19) de treuil dans le sens d'enroulement (24) du câble (2) de ligne caténaire de façon plus large que la gorge (27) de câble de la première et de la quatrième roue (17, 20) de treuil.

10. Machine selon l'une quelconque des revendications 2 à 9, **caractérisée en ce que** les roues (17, 18, 19, 20) de treuil sont logées conjointement avec le tambour de stockage (10) sur un cadre support (15), lequel peut pivoter par rapport au cadre (5) de la machine autour d'un axe (16) s'étendant dans le sens longitudinal de la machine, au moyen d'un dispositif d'entraînement (35).
